# EUROPEAN PATENT SPECIFICATION

(11) **EP 0 554 909 B1**
(45) Date of publication and mention of the grant of the patent: **12.06.1996**
(21) Application number: 93101865.9
(22) Date of filing: 05.02.1993
(51) Int. Cl.: B62L 1/14

(54) **Brake caliper support structure for a bicycle**
Fahrradfelgen-Bremsstütze
Support d'étrier d'un frein sur jante pour une bicyclette

(30) Priority: 07.02.1992 JP 4562/92 U
(43) Date of publication of application: 11.08.1993
(73) Proprietor: SHIMANO INC., Osaka (JP)
(72) Inventor: Nagano, Masashi, Izumi-shi, Osaka (JP); Sakashita, Tsuyoshi, Sakai-shi, Osaka (JP); Sugimoto, Masanori, Sakai-shi, Osaka (JP)
(74) Representative: Herrmann-Trentepohl, Werner, Dipl.-Ing.

(56) References cited:
- EP-A- 0 432 268
- DE-A- 3 720 115
- FR-A- 2 601 318

## Description

### BACKGROUND OF THE INVENTION

### FIELD OF THE INVENTION

The present invention relates to a brake caliper support structure for a bicycle, and more particularly to a structure for fixing a spring bearing forming part of a device for adjusting a biasing force of a spring acting against a brake control cable.

### DESCRIPTION OF THE RELATED ART

A bicycle brake such as a cantilever type brake includes a biasing spring mounted on a support shaft fixed to a bicycle frame for supporting each of brake calipers. This biasing spring acts against a brake control cable. In some cases, the spring has an adjusting screw attached thereto for adjusting the biasing force of the spring to adjust a spacing between a wheel rim and a brake shoe secured to the caliper. To adjust the biasing force, a spring bearing is mounted between the spring and adjusting screw. Conventionally, this spring bearing is secured to the caliper only through the spring. When the adjusting screw is turned, the spring bearing may be tilted or displaced sideways by a torsional force of the adjusting screw, often hampering a smooth and efficient adjusting operation.

In EP 0,432,268 a bicycle brake having an adjusting structure with a return spring is shown. One end of the return spring is inserted into an adjusting screw to prevent the spring end from lateral displacement. The assembly described results in the drawback that the brake arm tends to tilt during a brake operation.

In FR-A-2,601,318 a brake caliper is disclosed comprising a spring the biasing force of which can be adjusted to the caliper with an adjusting screw. It is not shown how the inclination of the caliper can be limited during the operation of the brake.

In DE-A-3,720,115 a caliper brake is shown being engaged with a spring, which is adjustable with adjusting means. In the inner part of the spring a ring is abutting at a disk engaged with the caliper. As the ring is free to move in axial direction it does not function as a restricting means to restrict tilting relative to the support shaft.

### SUMMARY OF THE INVENTION

An object of the present invention is to provide a structure for a caliper of a bicycle brake for restricting tilting relative to a support shaft and axial displacement of an engaging member engaging an elastic element, or of a spring bearing where the elastic element is a spring, forming part of an elasticity adjusting device, while allowing the caliper to pivot about the support shaft, to enable a smooth and efficient biasing force adjusting operation.

The above object is fulfilled, according to the present invention, by a caliper brake according to claim 1 comprising a stationary member fixed to a bicycle frame, a support shaft fixed to the stationary member, a brake caliper pivotably supported by the support shaft, an elastic member having one end thereof engaged with the brake caliper, an elasticity adjusting device disposed between the brake caliper and the elastic member for adjusting elasticity of the elastic member, the elasticity adjusting device including an engaging member rotatable about the support shaft and engaged with the one end of the elastic member, and a restricting device formed on the support shaft for restricting displacement of the engaging member on the support shaft.

With the caliper brake according to the present invention, the restricting device prevents the engaging member disposed between the elastic member and an elasticity adjusting screw from tilting and being axially displaced relative to the support shaft supporting the brake caliper. Consequently, an operation to adjust a biasing force of the elastic member may be carried out smoothly and efficiently.

Further and other objects, features and effects of the invention will become more apparent from the following more detailed description of the embodiments of the invention taken with reference to the accompanying drawings.

### BRIEF DESCRIPTION OF THE DRAWINGS

Fig. 1 is a view showing a principal portion of a caliper brake of a bicycle,
Fig. 2 is a sectional view taken on a plane including a pivotal axis X of a brake caliper shown in Fig. 1, showing a portion relating to a restricting device according to the present invention,
Fig. 3A is a sectional view taken on the same plane as Fig. 2, showing a mounting screw,
Fig. 3B is a sectional view of a mounting screw having a different construction to the mounting screw shown in Fig. 3A,
Fig. 4 is a front view of an elasticity adjusting device shown in Fig. 2,
Fig. 5 is a view showing a restricting device in another embodiment of the invention,
Fig. 6 is a view showing a restricting device in a further embodiment of the invention,
Fig. 7 is a sectional view of a principal portion formed as a unit in the embodiment shown in Fig. 6, and
Fig. 8 is a sectional view showing a restricting device in a still further embodiment of the invention.

### DETAILED DESCRIPTION OF THE PREFERRED EMBODIMENTS

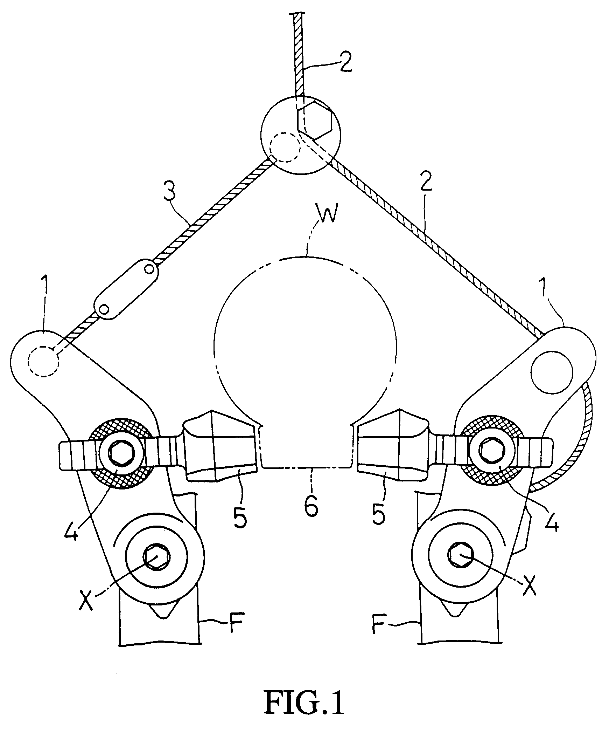

Fig. 1 shows a cantilever type caliper brake of a bicycle. This brake includes a pair of brake calipers 1 attached to bicycle frames F opposed to each other across a wheel W. Each of the brake calipers 1 is pivotable relative to the frame F about an axis X. One of the calipers 1 is connected at a free end thereof to a brake cable 2, while the other caliper 1 is connected at a free end thereof to the brake cable 2 through a connector 3. Thus, the caliper brake is operable by pulling and relaxing the brake cable 2.

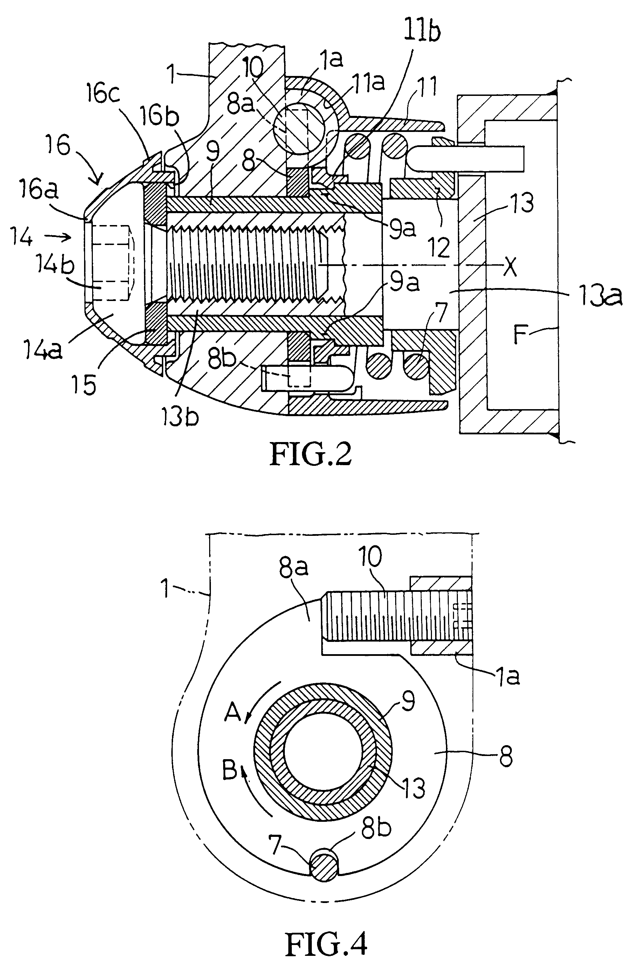

When the brake cable 2 is pulled, the right and left brake calipers 1 pivot upward under the operating force. This causes brake shoes 5 attached to intermediate positions of the brake calipers 1 through shoe clamps 4 to press upon side surfaces of a wheel rim 6 to apply friction brakes thereto. When the brake cable 2 is relaxed, the brake calipers 1 pivot downward under the biasing force of return springs 7 acting on proximal ends thereof as shown in Fig. 2. As a result the brakes shoes 5 retract from the side surfaces of the wheel rim 6 to cancel the brakes.

As shown in Fig. 2, a structure for connecting each brake caliper 1 to the bicycle frame F includes a mounting screw 14 and a plastic cap 16.

Specifically, a brass bush 9 is press fit in a mounting bore, not to be readily detachable therefrom, formed in the proximal end of each brake caliper 1. A brake bracket 13 fixed to the bicycle frame F has a caliper support shaft 13b extending therefrom to support the proximal end of the brake caliper 1 pivotably mounted thereon through the bush 9. The support shaft 13b and bush 9 act as a supporting device in this embodiment. The mounting screw 14 is meshed into a forward portion of the support shaft 13b, with a washer 15 disposed between a head 14a of the screw 14 and the bush 9. The mounting screw 14 acts through the washer 15 and bush 9 to hold the brake caliper 1 in place. The washer 15 has a buffer function to avoid deformation of the bush 9 under a clamping force of the mounting screw 14.

As shown in 3A, the cap 16 is mounted on the head 14a to be supported by the mounting screw 14. To present a good outward appearance, the cap 15 covers the head 14a except a socket 14b to receive a tool for tightening the mounting screw 14, a position between the head 14a and the proximal end of the brake caliper 1, and the washer 15.

The cap 16 has a first engaging portion 16a formed at one end thereof for engaging the head 14a of the mounting screw 14, and a second engaging portion 16b formed at the other end thereof for engaging the washer 15. Thus, the washer 15 and cap 16 may also be assembled in a single operation to attach the mounting screw 14 to the support shaft 13b.

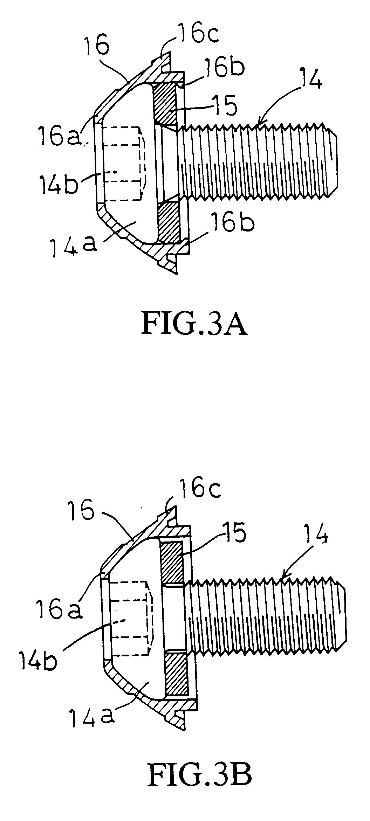

Specifically, the first engaging portion 16a is shaped, and elastically deformable since it is formed of plastic, to fit around the head 14a of the mounting screw 14. The second engaging portion 16b is shaped to extend toward a threaded portion of the mounting screw 14, and elastically deformable since it is formed of plastic, to fit around the washer 15. Thus, the cap 16 is fitted on the mounting screw 14 and washer 15 through the engaging portions 16a and 16b, thereby connecting the mounting screw 14 and washer 15 together. In other words, the mounting screw 14, washer 15 and cap 16 are formed into a unit as shown in Fig. 3A. An operation to attach the mounting screw 14 to the support shaft 13b completes assembly of the mounting screw 14, washer 15 and cap 16 at a stroke.

The cap 16 further includes a sealing tongue 16c defining therein a sealing labyrinth structure and a grease holding chamber G.

The cap 16 may simply cover the position between the mounting screw 14 and brake caliper 1, and the washer 15. In this embodiment, however, the cap 16 acts also as a seal element for preventing entry of rainwater, mud and like between the mounting screw 14 and brake caliper 1.

In the above construction, the mounting screw 14, washer 15 and cap 16 are formed into a unit by utilizing the cap 16. This provides an advantage of requiring a reduced number of components to form the unit. However, a construction as shown in Fig. 3B may be employed.

In this construction, the washer 15 is mounted on a shank of the mounting screw 14 before the threads are formed, and thereafter the threads are forged on the shank. The threads thus formed have a larger outside diameter than the shank, and act as a stopper to hold the washer 15 on the mounting screw 14. The cap 16 may be secured to the head 14a of the mounting screw 14 or to the washer 15, whereby the mounting screw 14, washer 15 and cap 16 are formed into a unit.

This construction may be applied to a mounting structure for varied bicycle components other than the brake caliper 1, such as a derailleur and a shift lever, although such constructions do not form part of the claimed invention.

A caliper support structure according to the present invention will be described next.

As shown in Fig. 2, a spring bearing 8 for engaging the return spring 7 is mounted for rotation about the axis X on the bush 9 press fit in the mounting bore of the brake caliper 1 to be immovable relative to the brake caliper 1. An adjusting screw 10 is meshed in a screw receiving portion 1a formed simultaneously with the brake caliper 1. A tubular caliper-side spring cover 11 is attached to the bush 9 for covering the return spring 7. This spring cover 11 defines an adjusting bore 11a. This construction enables adjustment of a restoring force for returning the brake caliper 1 to an inoperative position. The spring bearing 8 has a disk-like overall shape, with an inside diameter substantially corresponding to an outside diameter of the bush 9, and is disposed substantially perpendicular to the support shaft 13b. The screw receiving portion 1a, adjusting screw 10 and spring bearing 8 are collectively called an elasticity adjusting device herein.

A tool (not shown) is inserted through the adjusting bore 11a into the spring cover 11 to turn the adjusting screw 10. As a result, the biasing force of the return spring 7 is variable. Details of this construction are as follows.

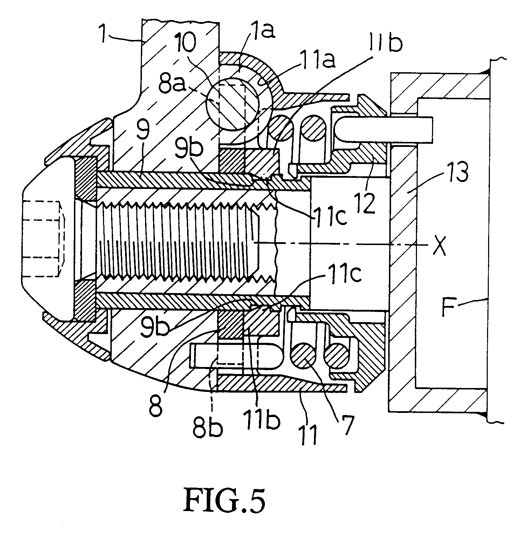

The return spring 7 has an end extending through a frame-side spring cover 12 into a spring receiving bore formed in the brake bracket 13, to be supported by the bicycle frame F through the brake bracket 13. As shown in Fig. 4, the other end of the return spring 7 extends into a cutout 8b of the spring bearing 8 to be rotatable with the spring bearing 8. The adjusting screw 10 is supported by the brake caliper 1 through the meshing engagement with the screw receiving portion 1a, and contacts an arm portion 8a of the spring bearing 8 to act as a stopper for the spring bearing 8. Thus, the other end of the return spring 7 is supported by the brake caliper 1 through the spring bearing 8 and adjusting screw 10.

When the adjusting screw 10 is turned, the adjusting screw 10 moves relative to the screw receiving portion 1a inwardly or outwardly of the caliper-side spring cover 11. In its movement inwardly of the cover 11, the adjusting screw 10 pushes the arm portion 8a to rotate the spring bearing 8 relative to the brake caliper 1 in a direction A in Fig. 4. As a result, the spring bearing 8 adjusts the return spring 7 by distorting it in a winding direction or an unwinding direction thereof. When the adjusting screw 10 is retracted from the arm portion 8a outwardly of the cover 11, the spring bearing 8 rotates in a direction B in Fig. 4 under the elastic restoring force of the return spring 7. Consequently, the spring bearing 8 adjusts the return spring 7 in the winding direction or unwinding direction thereof.

As shown in Fig. 2, the bush 9 defines a shoulder or stopper 9a to act as a restricting device for the spring bearing 8. During adjustment of the biasing force of the return spring 7, the restricting device restricts tilting and displacement along the support shaft 13b of the spring bearing 8 even if a force acts to tilt the spring bearing 8 relative to the pivotal axis X owing to play between the spring bearing 8 and bush 9 and the distorting force applied by the adjusting screw 10.

That is, when the spring bearing 8 tilts relative to the pivotal axis X the stopper 9a contacts an inner portion of the spring bearing 8 to restrict the tilting of the spring bearing 8 to a predetermined tilt angle relative to the axis X. This tilt angle is selected so that the adjusting screw 10 contacts the arm portion 8a of the spring bearing 8 over an area and in a positional relationship to push or bear the spring bearing 8 effectively.

Fig. 5 shows a modified restricting device which is in the form of a stopper defined by a portion 11b of the caliper-side spring cover 11 to act on the spring bearing 8. Although the caliper-side spring cover 11 is a component separate from the bush 9, the portion 11b of the cover 11 includes an attaching projection 11c engaged with a cover support groove 9b of the bush 9 to act as the restricting device. In this way, the spring bearing 8 is connected to the bush 9 to be immovable relative thereto against a reaction of support. Thus, the portion 11b of the spring cover 11 contacts and bears the spring bearing 8.

Other embodiments will be described hereinafter.

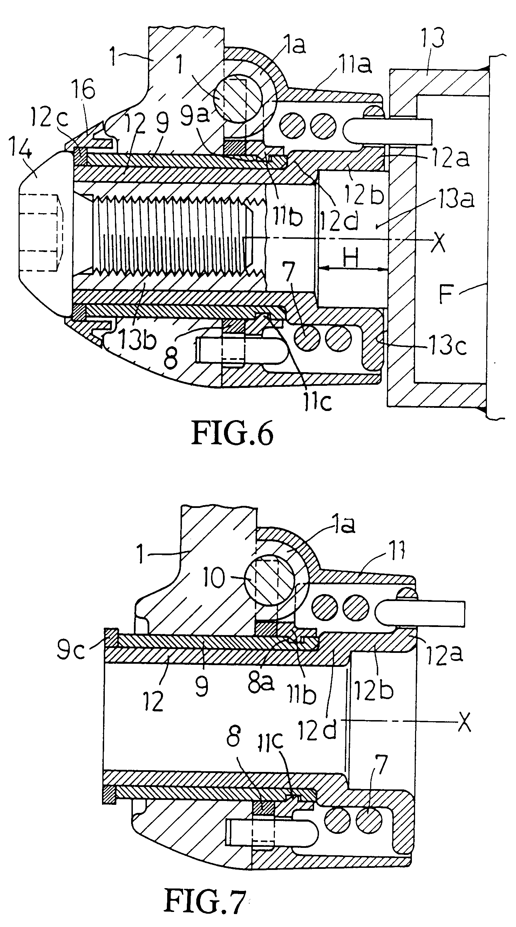

As shown in Fig. 6, the brake caliper 1 is mounted on an end region of a tubular shaft 12 which is an extension of the frame-side spring cover, through a metallic bush 9 press fit in the mounting bore formed in the proximal end of the brake caliper 1. The tubular shaft 12 is mounted on a caliper support shaft 13a extending from the brake bracket 13 secured to the bicycle frame F. The mounting screw 14 is meshed in the support shaft 13a to retain the tubular shaft 12 on the support shaft 13a, thereby to assemble the brake caliper 1 to the bicycle frame F. With the brake caliper 1 mounted in place, one end of the return spring 7, which is a torsion coil spring, extends through a seat portion 12a of the tubular shaft 12 into a spring receiving bore of the brake bracket 13. Thus, the return spring 7 acts as a stopper for holding the tubular shaft 12 against rotation relative to the support shaft 13a. The bush 9 is press fit in the brake caliper 1 to be unrotatable relative thereto. Consequently, the brake caliper 1 is pivotable through the bush 9 relative to the tubular shaft 12.

The return spring 7 is mounted on a shaft portion 12b of the tubular shaft 12 extending from the bush 9 toward a proximal end of the support shaft 13a. This shaft portion 12b provides guiding action to set the return spring 7 to position. One end of the return spring 7 extends into the spring receiving bore of the brake bracket 13 to be engaged therewith. The other end of the return spring 7 penetrates a connecting portion 11b of the spring cover 11 to be engaged with the brake caliper 1 through the spring bearing 8, adjusting screw 10 and screw receiving portion 1a. The return spring 7 applies a biasing force to the brake caliper 1 through the spring bearing 8 and adjusting screw 10, with the brake bracket 13 acting as a reaction element, thereby biasing the brake caliper 1 in a brake releasing direction.

The spring cover 11 is a plastic cover surrounding the return spring 7 to protect the return spring 7 from dust and the like. The spring cover 11 is elastically deformed to fit on the bush 9, to place a projection 11c of the connecting portion 11b in a cover supporting groove 9a of the bush 9. Thus, the spring cover 11 is supported by the tubular shaft 12 through the bush 9.

The tubular shaft 12 includes a first stopper 12c formed in a forward end thereof to act on the bush 9. A ring defining a support for a sealing cap 16 is press fit in the tubular shaft 12. The shaft portion 12b of the tubular shaft 12 provides a shoulder on an outer periphery thereof to define a second stopper 12d acting on the bush 9. The brake caliper 1, bush 9, return spring 7, cover 11 and tubular shaft 12 are formed into a unit as shown in Fig. 7. An operation to connect the tubular shaft 12 to the caliper support shaft 13a completes assembly of this unit to the bicycle frame F at a stroke.

That is, the brake caliper 1 and bush 9 are not readily separable since the bush 9 is press fit in the caliper 1. The cover 11 and bush 9 are not readily separable because of the connection through the projection 11c of the connecting portion 11b and the cover supporting groove 9a of the bush 9. The first stopper 12c and second stopper 12d contact opposite ends of the bush 9 to maintain the bush 9 on the tubular shaft 12. The seat portion 12a of the tubular shaft 12 contacts one end of the return spring 7, so that the return spring 7 is not detachable from the tubular shaft 12. The first stopper 12c, second stopper 12d and seat portion 12a retain the brake caliper 1, bush 9, return spring 7 and cover 12 in the state assembled to the tubular shaft 12. Consequently, the brake caliper 1, bush 9, return spring 7, cover 11 and tubular shaft 12 constitute the unit to be assembled to the bicycle frame F in a single operation.

In the above construction, the caliper support shaft 13a of large diameter has an increased height H so that the seat portion 12a of the tubular shaft 12 is out of contact with an opposed surface 13c of the brake bracket 13. This provides a relatively strong support for the return spring 7 to allow elastic deformation of the spring 7 with pivotal movement in a brake applying direction of the brake caliper 1, even if the end of the return spring 7 is insufficiently inserted into the spring receiving bore of the brake bracket 13.

That is, even with the seat portion 12a of the tubular shaft 12 out of contact with the opposed surface 13c of the brake bracket 13, a tightening force applied to the mounting screw 14 positively presses the tubular shaft 12 upon the support shaft 13a to provide a relatively strong support against rotation of the tubular shaft 12. In addition, one end of the return spring 7 extends through and engaged with the seat portion 12a of the tubular shaft 12. Thus, the tubular shaft 12 provides a relatively strong support for the return spring 7, so that the spring 7 does not rotate with pivotal movement of the brake caliper 1 even if the end of the return spring 7 is insufficiently inserted into the brake bracket 13.

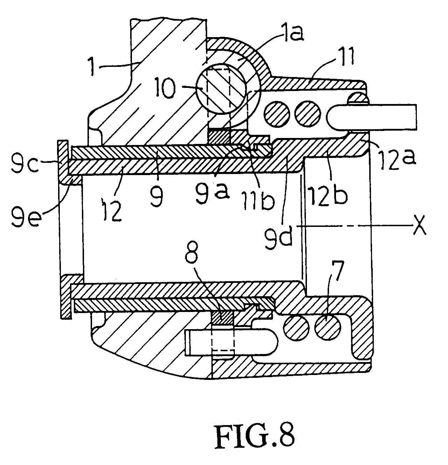

As shown in Fig. 8, the first stopper 12c of the tubular shaft 12 acting on the bush 9 may be defined by an element 9e press fit in the forward end of the tubular shaft 12. Thus, the first stopper 12c is not readily detachable from the tubular shaft 12.

The stoppers 12c and 12d and seat portion 12a may be replaced with stopper rings mounted on the tubular shaft 12 to contact or receive the bush 9 and return spring 7. In this way, or in various other ways, the bush 9, brake caliper 1 and return spring 7 may be retained on the tubular shaft 12. The bush 9 may be replaced with a needle bearing or the like.

A stopper for the spring bearing 8 may be defined by an additional element provided specially for the purpose, instead of the bush or spring cover. Further, a stopper may be connected directly to the brake caliper 1. That is, the stopper may be formed on the brake caliper 1, or may be formed on an element connected to the brake caliper 1.

## Claims

1. A bicycle caliper brake fixed to a stationary member (13) mounted to a bicycle frame (F) comprising:
a support means (13b, 9) fixed to said stationary member;
a brake caliper (1) pivotably supported by said support means;
an elastic member (7) having one end thereof engaged with said brake caliper;
elasticity adjusting means (10, 1a, 8) disposed between said brake caliper and said elastic member for adjusting elasticity of said elastic member, said elasticity adjusting means including an engaging member (8) rotatable about said support means and engaged with said one end of said elastic member;
restricting means (9a, 9b, 11b, 11c) on said support means for restricting displacement of said engaging member on said support means;
**characterized in that** said engaging member (8) is restricted in its movement in axial and incline direction on said support means by said restricting means which includes a shoulder (9a, 9b) provided on said support means, said shoulder abutting said engaging means directly or indirectly to restrict said displacement of said engaging member.

2. A caliper brake according to Claim 1 characterized in that said restricting means is in form of a shoulder formed peripherally of said support means.

3. A caliper brake according to Claim 1 characterized in that said restricting means is in form of a groove formed peripherally of said support means.

4. A caliper brake according to Claim 3 characterized in that said engaging member is engaged with said groove to be restricted against displacement on said support means.

5. A caliper brake according to Claim 3 characterized in that said restricting means is in form of a stopper engaged with said groove to be restricted against displacement on said support means, said stopper contacting said engaging member to restrict displacement thereof on said support means.

6. A caliper brake according to one of the Claims 1 to 5 characterized in that said engaging member is in form of a disk disposed substantially perpendicular to said support means.

7. A caliper brake according to one of the Claims 1 to 6 characterized in that said support means includes a support shaft formed integral with said stationary member, and a tubular bush mounted on said support shaft.

8. A caliper brake according to Claim 6 characterized in that said disk defines a bore having an inside diameter substantially corresponding to an outside diameter of said bush.

9. A caliper brake according to Claim 7 characterized in that said bush is in frictional engagement with said brake caliper.

10. A caliper brake according to one of the Claims 1 to 9 characterized in that said elastic member has the other end engaged with said stationary member.

11. A caliper brake according to one of the Claims 1 to 10 characterized in that said elastic member comprises a coil spring.

12. A caliper brake according to one of the Claims 1 to 11 characterized in that said displacement of said engaging member is tilting relative to said support means, said restricting means being operable to restrict the tilting of said engaging member within a predetermined angle.

13. A caliper brake according to one of the Claims 1 to 11 characterized in that said displacement of said engaging member is parallel movement relative to said support means.

14. A caliper brake according to one of the Claims 1 to 13 characterized in that said elasticity adjusting means further includes an adjusting screw for contacting said engaging member.

15. A caliper brake according to Claims 14 characterized in that said adjusting screw is meshed with said brake caliper.

16. A caliper brake according to one of the Claims 1 to 15 characterized in that said support means defines a threaded bore for meshing with mounting screw means for connecting said brake caliper to said stationary member.

17. A caliper brake according to Claim 16 characterized in that said mounting screw means includes a mounting screw, a washer, and a cap for covering part of a head of said mounting screw and said washer.

18. A caliper brake according to Claim 17 characterized in that said mounting screw includes a socket formed in said head for receiving a tightening tool, said cap covering said head except said socket, and including a portion extending toward a threaded portion of said mounting screw to prevent detachment of said washer from said cap.

## Patentansprüche

1. Fahrradfelgenbremse, die an einem festen Teil (13) angebracht ist, das an einem Fahrradrahmen (F) befestigt ist, umfassend:
Stützmittel (13b, 9), die an dem festen Teil angebracht sind;
einen Bremsarm (1), der drehbar durch die Stützmittel abgestützt ist;
ein Federelement (7), dessen eines Ende mit dem Bremsarm in Eingriff steht;
Elastizitätseinstellmittel (10, 1a, 8), die zwischen dein Bremsarm und dem Federelement zur Einstellung der Spannkraft des Federelements angeordnet sind, wobei die Elastizitätseinstellmittel ein Eingriffsteil (8) aufweisen, das drehbar um die Stützmittel ist und mit dem einen Ende des Federelements in Eingriff steht;
Begrenzungsmittel (9a, 9b, 11b, 11c) auf den Stützmitteln, um eine Verschiebung des Eingriffsteils auf den Stützmitteln zu begrenzen;
**dadurch gekennzeichnet, daß** das Eingriffsteil (8) in seiner Beweglichkeit in axialer und geneigter Richtung auf den Stützmitteln durch die Begrenzungsmittel begrenzt ist, wobei die Begrenzungsmittel einen Absatz (9a, 9b) aufweisen, der auf den Stützmitteln angeordnet ist und direkt oder indirekt an das Eingriffsteil anstößt, um die Verschiebung des Eingriffsteils zu begrenzen.

2. Fahrradfelgenbremse nach Anspruch 1 **dadurch gekennzeichnet, daß** die Begrenzungsmittel die Form eines Absatzes aufweisen, der am Umfang der Stützmittel angeordnet ist.

3. Fahrradfelgenbremse nach Anspruch 1 **dadurch gekennzeichnet, daß** die Begrenzungsmittel eine am Umfang der Stützmittel gebildete Rille aufweisen.

4. Fahrradfelgenbremse nach Anspruch 1 **dadurch gekennzeichnet, daß** das Eingriffsteil mit der Rille in Eingriff steht, um gegen eine Verschiebung auf den Stützmitteln gesichert zu sein.

5. Fahrradfelgenbremse nach Anspruch 3 **dadurch gekennzeichnet, daß** die Begrenzungsmittel die Form eines Stoppers aufweisen, der mit der Rille in Eingriff steht, um gegen eine Veschiebung auf den Stützmitteln gesichert zu sein, wobei der Stopper das Eingriffteil berührt, um eine Verschiebung des Eingriffsteil auf den Stützmitteln zu verhindern.

6. Fahrradfelgenbremse nach einem der Ansprüche 1 bis 5, **dadurch gekennzeichnet, daß** das Eingriffsteil die Form einer Scheibe besitzt und im wesentlichen senkrecht zu den Stützmitteln angeordnet ist.

7. Fahrradfelgenbremse nach einem der Ansprüche 1 bis 6, **dadurch gekennzeichnet, daß** die Stützmittel einen Stützschaft aufweisen, der integral mit dem festen Teil geformt ist und eine rohrförmige Hülse aufweisen, die an dem Stützschaft befestigt ist.

8. Fahrradfelgenbremse nach Anspruche 6, **dadurch gekennzeichnet, daß** die Scheibe eine Bohrung besitzt, die einen Innendurchmesser aufweist, der im wesentlichen dem Außendurchmesser der Hülse entspricht.

9. Fahrradfelgenbremse nach Ansprüche 7, **dadurch gekennzeichnet, daß** die Hülse in einem reibungsbehafteten Eingriff mit dem Bremsarm ist.

10. Fahrradfelgenbremse nach einem der Ansprüche 1 bis 9, **dadurch gekennzeichnet, daß** das Federelement mit seinem anderen Ende mit dem festen Teil in Eingriff steht.

11. Fahrradfelgenbremse nach einem der Ansprüche 1 bis 10, **dadurch gekennzeichnet, daß** das Federelement eine Schraubenfeder aufweist.

12. Fahrradfelgenbremse nach einem der Ansprüche 1 bis 11, **dadurch gekennzeichnet, daß** die Verschiebung des Eingriffsteils ein Kippen relativ zu den Stützmitteln ist und die Begrenzungsmittel zur Begrenzung des Kippens des Eingriffsteils innerhalb eines vorgegebenen Winkels einsetzbar sind.

13. Fahrradfelgenbremse nach einem der Ansprüche 1 bis 11, **dadurch gekennzeichnet, daß** die Verschiebung des Eingriffsteil eine Parallelbewegung relativ zu den Stützmitteln ist.

14. Fahrradfelgenbremse nach einem der Ansprüche 1 bis 13, **dadurch gekennzeichnet, daß** die Elastizitätseinstellmittel ferner eine Einstellschraube, die in Kontakt mit den Eingriffsteil ist, aufweist.

15. Fahrradfelgenbremse nach Anspruch 14, **dadurch gekennzeichnet, daß** die Einstellschraube in Eingriff mit dem Bremsarm ist.

16. Fahrradfelgenbremse nach einem der Ansprüch 1 bis 15, **dadurch gekennzeichnet, daß** die Stützmittel eine Gewindebohrung aufweisen, um mit Befestigungsschraubmitteln ineinanderzugreifen, um den Bremsarm mit den festen Teil zu verbinden.

17. Fahrradfelgenbremse nach Anspruch 16, **dadurch gekennzeichnet, daß** die Befestigungsschraubmittel eine Befestigungsschraube, eine Unterlegscheibe und einen Deckel, um einen Teil des Kopfes der Befestigungsschraube und der Unterlegscheibe abzudecken, aufweisen.

18. Fahrradfelgenbremse nach Anspruch 17**, dadurch gekennzeichnet, daß** die Befestigungsschraube einen in den Kopf der Schraube geformten Innensechskant zur Aufnahme eines Befestigungswerkzeugs besitzt, der Deckel den Kopf außer dem Innensechskant abdeckt und der Deckel einen Teil aufweist, der sich entlang des Gewindeteils der Befestigungsschraube erstreckt, um ein Loslösen der Unterlegscheibe von dem Deckel zu verhindern.

## Revendications

1. Étrier de frein de bicyclette monté sur un élément fixe **(13)** d'un cadre de bicyclette **(F)** comprenant :
des moyens supports **(13b, 9)** fixés audit élément fixe ;
un étrier de frein **(1)** soutenu de manière pivotante par lesdits moyens supports ;
un élément élastique **(7)** ayant une extrémité en prise avec ledit étrier de frein ;
des moyens de réglage d'élasticité **(10, 1a, 8)** placés entre ledit étrier de frein et ledit élément élastique pour régler l'élasticité dudit élément élastique, lesdits moyens de réglage d'élasticité comprenant un élément d'engrènement **(8)** rotatif autour desdits moyens supports et en prise avec ladite une extrémité dudit élément élastique ;
des moyens de limitation **(9a, 9b, 11b, 11c)** sur lesdits moyens supports pour limiter le déplacement dudit élément d'engrènement sur lesdits moyens supports;
caractérisé en ce que ledit élément d'engrènement **(8)** est limité dans son mouvement dans la direction axiale et est incliné sur lesdits moyens supports par lesdits moyens de limitation, qui comprennent un épaulement **(9a, 9b)** prévu sur lesdits moyens supports, ledit épaulement butant contre lesdits moyens d'engrènement directement ou indirectement pour limiter ledit déplacement dudit élément d'engrènement.

2. Etrier de frein selon la revendication 1, caractérisé en ce que lesdits moyens de limitation sont de la forme d'un épaulement formé sur la périphérie desdits moyens supports.

3. Etrier de frein selon la revendication 1, caractérisé en ce que lesdits moyens de limitation sont de la forme d'une rainure formée à la périphérie desdits moyens supports.

4. Étrier de frein selon la revendication 3, caractérisé en ce que ledit élément d'engrènement est en prise avec ladite rainure de limitation du déplacement sur lesdits moyens supports.

5. Étrier de frein selon la revendication 3, caractérisé en ce que lesdits moyens de limitation ont la forme d'une butée en prise avec ladite rainure de limitation du déplacement sur lesdits moyens supports, ladite butée étant en contact avec ledit élément d'engrènement pour limiter le déplacement de celui-ci sur lesdits moyens supports.

6. Étrier de frein selon l'une des revendications 1 à 5, caractérisé en ce que ledit élément d'engrènement ait la forme d'un disque disposé substantiellement perpendiculairement auxdits moyens supports.

7. Étrier de frein selon l'une des revendications 1 à 6, caractérisé en ce que lesdits moyens supports comprennent un arbre support faisant corps avec ledit élément fixe, et une douille tubulaire montée sur ledit arbre support.

8. Étrier de frein selon la revendication 6, caractérisé en ce que ledit disque délimite un perçage ayant un diamètre intérieur correspondant substantiellement à un diamètre extérieur de ladite douille.

9. Étrier de frein selon la revendication 7, caractérisé en ce que ladite douille est en prise par friction avec ledit étrier de frein.

10. Étrier de frein selon l'une des revendications 1 à 9, caractérisé en ce que l'élément élastique a l'autre extrémité en prise avec ledit élément fixe.

11. Étrier de frein selon l'une des revendications 1 à 10, caractérisé en ce que ledit élément élastique comprend un ressort à boudin.

12. Étrier de frein selon l'une des revendications 1 à 11, caractérisé en ce que ledit déplacement dudit élément d'engrènement est oblique par rapport auxdits moyens supports, lesdits moyens de limitation étant utilisables pour limiter la rotation dudit élément d'engrènement dans la limite d'un angle prédéterminé.

13. Étrier de frein selon l'une des revendications 1 à 11, caractérisé en ce que ledit déplacement dudit élément d'engrènement est un mouvement parallèle relativement aux moyens supports.

14. Étrier de frein selon l'une des revendications 1 à 13, caractérisé en ce que lesdits moyens de réglage d'élasticité comprennent, de plus, une vis de réglage venant en contact avec ledit élément d'engrènement.

15. Étrier de frein selon la revendication 14, caractérisé en ce que ladite vis de réglage est en prise avec ledit étrier de frein.

16. Étrier de frein selon l'une des revendications 1 à 15, caractérisé en ce que lesdits moyens supports définissent un perçage fileté pour engagement avec des moyens à vis de montage destinés à relier ledit étrier de frein audit élément fixe.

17. Étrier de frein selon la revendication 16, caractérisé en ce que lesdits moyens à vis de montage comprennent une vis de montage, une rondelle, et un capuchon pour couvrir une partie d'une tête de ladite vis de montage et de ladite rondelle.

18. Étrier de frein selon la revendication 17, caractérisé en ce que ladite vis de montage comprend un emboîtement formé dans ladite tête pour recevoir un outil de serrage, ledit capuchon couvrant ladite tête sauf ledit emboîtement, et comprenant une partie s'étendant en direction d'une partie filetée de ladite vis de montage pour empêcher un détachement de ladite rondelle depuis ledit capuchon.
